# FASCICULE DE BREVET EUROPEEN

(11) **EP 2 721 278 B1**
(45) Date de publication et mention de la délivrance du brevet: **24.01.2018**
(21) Numéro de dépôt: 12731544.8
(22) Date de dépôt: 07.06.2012
(51) Int. Cl.: F02K 9/88, F02K 9/50, F02K 9/94, B64G 1/26

(54) **ENSEMBLE PROPULSIF CRYOGÉNIQUE ET PROCÉDÉ D'ALIMENTATION D'UN RÉSERVOIR D'UN TEL ENSEMBLE**
CRYOGENIC PROPULSIVE SYSTEM AND METHOD FOR FEEDING A TANK OF SUCH A SYSTEM
KRYOGENISCHE SCHUBANORDNUNG UND VERFAHREN ZUR VERSORGUNG EINES RESERVOIRS EINER SOLCHEN ANORDNUNG

(30) Priorité: 17.06.2011 FR 1155315
(43) Date de publication de la demande: 23.04.2014
(73) Titulaire: Snecma, 75015 Paris (FR)
(72) Inventeur: BARTHOULOT, Jean-Luc, F-27510 Panilleuse (FR); VUILLAMY, Didier, F-76230 Quincampoix (FR); SANNINO, Jean-Michel, F-27950 Saint-marcel (FR)
(74) Mandataire: Calvo de Nó, Rodrigo
(86) Numéro de dépôt international: PCT/FR2012/051283
(87) Numéro de publication internationale: WO 2012/172238

(56) Documents cités:
- EP-A1- 1 241 341
- WO-A1-03/078818
- US-A- 2 683 963

## Description

La présente invention concerne le domaine de la propulsion cryogénique, et plus particulièrement un ensemble propulsif cryogénique, comprenant au moins un propulseur principal rallumable, un premier réservoir cryogénique, relié au propulseur principal pour l'alimenter avec un premier ergol, un premier réservoir de gaz, et au moins un propulseur de tassement, ainsi qu'un procédé d'alimentation du premier réservoir de gaz avec le premier ergol à l'état gazeux.

Dans les engins propulsés par des propulseurs à réaction, en particulier des moteurs-fusées, alimentés en ergols cryogéniques, comme par exemple l'hydrogène et l'oxygène liquides, les réservoirs de ces ergols cryogéniques sont normalement dépressurisés pendant les phases de vol balistiques jusqu'à la pression de saturation de chaque ergol afin de pouvoir maintenir un contrôle de la température des ergols cryogéniques.

Toutefois, si le propulseur doit être redémarré après une phase balistique, le réservoir de propergol cryogénique est alors re-pressurisé pour que la pression du propergol soit conforme aux conditions d'alimentation du moteur. Les systèmes de re-pressurisation habituellement utilisés font usage d'un gaz de re-pressurisation, tel que l'hélium, stocké à haute pression. Des exemples de tels systèmes de re-pressurisation de l'art antérieur ont été divulgués, par exemple, dans les demandes de brevet russes RU 2 159 348 C1, RU 2 159 861, RU 2 177 070 C2, RU 2 119 082 C2, RU 2 132 477 C1, RU 2 339 833 C2 et RU 2 339 835 C2. Toutefois, cette solution présente l'inconvénient d'imposer l'embarquement du gaz de re-pressurisation à bord de l'engin. Ainsi, une masse de 20 kg d'hélium sera normalement requise pour une re-pressurisation d'un réservoir de 60 m³ d'hydrogène liquide. Un réservoir d'hélium contenant cette masse d'hélium en état gazeux à haute pression (environ 200 bar) aura typiquement une masse globale de 200 kg. Cette masse supplémentaire est embarquée à bord de l'engin en détriment de la charge utile. En outre, elle devra être multipliée par le nombre de fois que le réservoir cryogénique devra être re-pressurisé après une phase balistique prolongée.

Dans l'ensemble propulsif de l'étage S-IV-B du lanceur Saturn V, le gaz de re-pressurisation était stocké à l'état liquide, ce qui permettait de réduire la masse de stockage d'environ 30%. Toutefois, cette diminution est au moins partiellement compensée par la présence alors nécessaire de moyens de réchauffage, lesquels augmentent en outre la complexité du système d'alimentation du moteur en propergols. Des inconvénients similaires se présenteront aussi dans un système faisant usage de générateurs de gaz de re-pressurisation, tel que celui divulgué dans RU 2 147 344.

Afin d'éviter ces inconvénients, certains ensembles propulsifs cryogéniques de l'état de la technique, notamment à bord des lanceurs Saturn V (moteur J2) et H2A ainsi que sur la navette spatiale STS, vaporisent une fraction d'au moins un des ergols cryogéniques pour la re-pressurisation. Toutefois, cette alternative nécessite aussi normalement la présence de moyens de réchauffage séparés ou bien d'une dérivation d'un débit d'ergol en état gazeux chauffé par le propulseur principal. Si les moyens de réchauffage impliquent normalement une masse supplémentaire, la dérivation d'un débit d'ergol vaporisé par le propulseur principal ne peut fournir l'ergol gazeux que pendant le fonctionnement du propulseur principal, ce qui rend nécessaire le stockage d'une quantité suffisante d'ergol gazeux pour la re-pressurisation pendant la durée de la phase de vol balistique. EP1241341 montre un module cryotechnique comprenant deux échangeurs. En outre, les ensembles propulsifs cryogéniques avec un propulseur principal rallumable comportent normalement au moins un propulseur de tassement, c'est-à-dire, un propulseur secondaire fonctionnant pendant la phase de vol dite balistique, afin de maintenir une légère accélération pour plaquer les ergols liquides au fond des réservoirs cryogéniques, et ainsi assurer l'alimentation du propulseur principal lors de son rallumage. Typiquement, ces propulseurs de tassement sont alimentés en ergols liquides ou gazeux à partir de réservoirs séparés des réservoirs cryogéniques. Afin de commander l'orientation d'un tel ensemble propulsif cryogénique, il est aussi courant de l'équiper de tuyères de commande d'orientation, alimentées typiquement en gaz froid, ce qui implique aussi des réservoirs de gaz séparés.

L'invention vise à proposer un ensemble propulsif cryogénique comprenant au moins un propulseur principal rallumable, un premier réservoir cryogénique, relié au propulseur principal pour l'alimenter avec un premier ergol, un premier réservoir de gaz, et au moins un propulseur de tassement, et qui permette de continuer à fournir de l'ergol à l'état gazeux au premier réservoir de gaz même pendant une phase de vol dite balistique durant laquelle le propulseur principal est éteint. Ainsi, un réservoir de gaz de volume restreint pourra répondre à une variété de besoins en gaz pendant la phase de vol dite balistique, tels que, par exemple, la re-pressurisation du premier réservoir cryogénique, l'alimentation du propulseur de tassement, et/ou celle de propulseurs de commande d'orientation.

Selon un premier aspect, ce but est atteint grâce au fait que l'ensemble propulsif cryogénique comprend aussi un premier circuit d'alimentation du premier réservoir de gaz, relié au premier réservoir cryogénique et comprenant un échangeur de chaleur pour vaporiser, avec une chaleur dégagée par l'au moins un propulseur de tassement, un débit liquide du premier ergol, extrait du premier réservoir cryogénique, afin d'alimenter le premier réservoir de gaz avec le premier ergol à l'état gazeux. Grâce à ces dispositions, la chaleur dégagée par le propulseur de tassement peut être utilisée pendant la phase dite balistique pour chauffer et vaporiser le premier ergol, et ainsi activement fournir un débit de gaz au premier réservoir de gaz même pendant cette phase de vol. Le volume, et donc la masse, du premier réservoir de gaz peuvent être réduits de cette manière, même si le gaz qu'il contient doit être exploité pendant la phase de vol dite balistique, tandis que la masse et complexité des moyens de réchauffage restent aussi restreintes. En particulier, le premier réservoir de gaz peut être relié au premier réservoir cryogénique pour sa pressurisation, et/ou au propulseur de tassement et/ou au moins un propulseur de commande d'orientation formant aussi partie de l'ensemble propulsif cryogénique pour leur alimentation. Le premier réservoir de gaz peut ainsi subvenir aux besoins en gaz de ces éléments de l'ensemble propulsif cryogénique avec le premier ergol préalablement reçu à l'état gazeux dans ce premier réservoir de gaz à travers son premier circuit d'alimentation. Le premier circuit d'alimentation du premier réservoir de gaz peut comprendre en outre au moins une pompe d'alimentation afin d'assurer la circulation forcée du premier ergol vers le premier réservoir de gaz.

Selon un deuxième aspect, l'ensemble propulsif cryogénique comprend en outre un deuxième circuit d'alimentation du premier réservoir de gaz, relié au premier réservoir cryogénique et comprenant un échangeur de chaleur pour vaporiser, avec une chaleur dégagée par le propulseur principal, un débit liquide du premier ergol extrait du premier réservoir cryogénique afin d'alimenter le premier réservoir de gaz avec le premier ergol à l'état gazeux. En particulier, le deuxième circuit d'alimentation du premier réservoir de gaz peut être une dérivation d'un circuit d'alimentation du propulseur principal. De cette manière, le premier réservoir de gaz peut déjà être alimenté en gaz pendant le premier allumage du propulseur principal, ainsi que pendant des allumages subséquents.

Selon un troisième aspect, l'ensemble propulsif cryogénique comprend en outre un deuxième réservoir cryogénique relié au propulseur principal pour l'alimenter avec un deuxième ergol, un deuxième réservoir de gaz, et un premier circuit d'alimentation du deuxième réservoir de gaz, relié au deuxième réservoir cryogénique et comprenant un échangeur de chaleur pour vaporiser, avec une chaleur générée par l'au moins un propulseur de tassement, un débit liquide du deuxième ergol, extrait du deuxième réservoir cryogénique, afin d'alimenter le premier réservoir de gaz avec le premier ergol à l'état gazeux. Ainsi, ce deuxième réservoir de gaz peut être alimenté avec un débit du deuxième ergol à l'état gazeux pendant la phase de vol dite balistique, ce deuxième ergol à l'état gazeux pouvant ensuite être utilisé, par exemple, pour la re-pressurisation du deuxième réservoir cryogénique et/ou l'alimentation d'au moins un propulseur de tassement et/ou de commande d'orientation, qu'il soit mono- ou bi-ergol.

L'invention concerne également un étage supérieur d'engin lanceur de satellites comportant un tel ensemble propulsif cryogénique. La capacité de rallumage du propulseur principal est en effet particulièrement utile dans de tels engins, notamment pour le lancement conjoint de plusieurs satellites sur des orbites différentes ou la mise sur l'orbite finale des satellites.

L'invention concerne également un procédé d'alimentation d'un premier réservoir de gaz d'un ensemble propulsif cryogénique avec un premier ergol à l'état gazeux. Selon un premier aspect de ce procédé, quand un propulseur principal rallumable est éteint et au moins un propulseur de tassement est allumé, un débit liquide du premier ergol est extrait d'un premier réservoir cryogénique à travers un premier circuit d'alimentation du premier réservoir de gaz, et vaporisé, dans un échangeur de chaleur dudit premier circuit d'alimentation du premier réservoir de gaz, par une chaleur dégagée par l'au moins un propulseur de tassement, avant d'être fourni au premier réservoir de gaz. Le premier réservoir de gaz est ainsi alimenté en gaz pendant cette phase de vol dite balistique. Ce gaz pourra ensuite être utilisé, par exemple, pour la re-pressurisation du premier réservoir cryogénique, et/ou pour alimenter le propulseur de tassement, des propulseurs de commande d'orientation et/ou d'autres dispositifs tels que des piles à combustible, une torche d'allumage et/ou des actionneurs fluidiques.

Selon un deuxième aspect, quand le propulseur principal est allumé, un débit liquide du premier ergol est extrait du premier réservoir cryogénique à travers un deuxième circuit d'alimentation du premier réservoir de gaz, et vaporisé, dans un échangeur de chaleur du deuxième circuit d'alimentation du premier réservoir de gaz, par une chaleur dégagée par le propulseur principal, avant d'être fourni au premier réservoir de gaz. Ainsi, le premier réservoir de gaz est aussi alimenté en gaz pendant cette autre phase de vol.

De cette manière, il est aussi possible d'alimenter non seulement un premier réservoir de gaz avec un premier ergol à l'état gazeux de cette manière, mais aussi simultanément un deuxième réservoir de gaz avec un deuxième ergol à l'état gazeux. Ainsi, quand le propulseur principal rallumable est éteint et au moins un propulseur de tassement est allumé, un débit liquide d'un deuxième ergol peut être extrait d'un deuxième réservoir cryogénique à travers un premier circuit d'alimentation du deuxième réservoir de gaz, et vaporisé, dans un échangeur de chaleur dudit premier circuit d'alimentation du deuxième réservoir de gaz, par une chaleur dégagée par l'au moins un propulseur de tassement, avant d'être fourni au deuxième réservoir de gaz.

De manière analogue, quand le propulseur principal est allumé, un débit liquide du deuxième ergol peut être extrait du deuxième réservoir cryogénique à travers un deuxième circuit d'alimentation du deuxième réservoir de gaz, et vaporisé, dans un échangeur de chaleur du deuxième circuit d'alimentation du deuxième réservoir de gaz, par une chaleur dégagée par le propulseur principal, avant d'être fourni au deuxième réservoir de gaz. Tout comme le gaz du premier réservoir, le gaz de ce deuxième réservoir pourra ensuite être utilisé, par exemple, pour la re-pressurisation du réservoir cryogénique correspondant, pour l'alimentation du propulseur de tassement, de propulseurs de commande d'orientation et/ou d'autres éléments, comme des piles de combustible, des torches d'allumage de propulseurs, et/ou des actionneurs fluidiques.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 représente schématiquement un ensemble propulsif cryogénique suivant ce mode de réalisation ;
- la figure 2 représente schématiquement la circulation des ergols dans l'ensemble propulsif cryogénique de la figure 1 quand un propulseur principal est allumé ;
- la figure 3 représente schématiquement la circulation des ergols dans l'ensemble propulsif cryogénique de la figure 1 pendant une phase de vol dite balistique, avec le propulseur principal éteint ;
- la figure 4 représente schématiquement la circulation des ergols dans l'ensemble propulsif cryogénique de la figure 1 lors de la re-pressurisation des réservoirs cryogéniques préalablement au rallumage du propulseur principal à la fin d'une phase de vol balistique ;et
- la figure 5 représente schématiquement la circulation d'un premier ergol vers des propulseurs de commande d'attitude dans l'ensemble propulsif cryogénique de la figure 1.

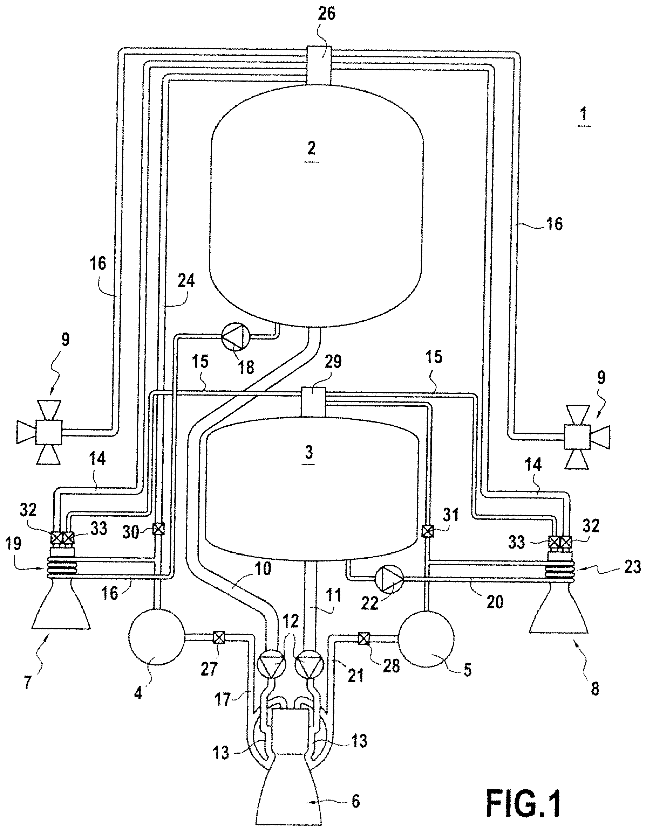

Dans le domaine des moteurs fusées, l'utilisation de propulseurs rallumables, notamment pour les étages supérieurs d'engins lanceurs de satellites, est devenue assez courante. En effet, un étage supérieur équipé d'un propulseur principal rallumable peut permettre le lancement conjoint de plusieurs satellites vers des orbites différentes. Un ensemble propulsif cryogénique 1 pouvant équiper un tel étage supérieur est illustré schématiquement sur la figure 1. Comme on peut apprécier sur cette figure, cet ensemble propulsif cryogénique 1 comprend un premier réservoir cryogénique 2, un deuxième réservoir cryogénique 3, un premier réservoir de gaz 4, un deuxième réservoir de gaz 5, un propulseur principal 6, un premier propulseur de tassement 7, un deuxième propulseur de tassement 8, et des propulseurs 9 de commande d'orientation. Dans le mode de réalisation illustré, les propulseurs de tassement 7,8 sont des propulseurs bi-ergols, tandis que les propulseurs de commande d'orientation 9 sont des simples tuyères à gaz froid.

Le premier réservoir cryogénique 2 est relié au propulseur principal 6 à travers un premier circuit 10 d'alimentation du propulseur principal 6, et le deuxième réservoir cryogénique 3 est relié au propulseur principal 6 à travers un deuxième circuit 11 d'alimentation du propulseur principal 6. Le premier et le deuxième circuit 10, 11 d'alimentation du propulseur principal 6 comportent chacun une turbopompe 12 et un échangeur de chaleur 13 pour pomper un ergol liquide du réservoir cryogénique 2, 3 correspondant et le vaporiser en utilisant une chaleur générée par le propulseur principal avant son injection dans une chambre de combustion du propulseur principal 6.

Les turbopompes 12 peuvent être actionnées, par exemple, par le premier ergol à l'état gazeux après son passage par un échangeur de chaleur 13 et vaporisation. Alternativement, les turbopompes pourraient toutefois aussi être actionnées par des gaz chauds générés dans une chambre de combustion auxiliaire alimentée aussi en ergols. Des turbopompes cryogéniques de ces deux types sont bien connues de la personne du métier dans le domaine des ensembles propulsifs cryogéniques. Les échangeurs de chaleur 13, typiquement intégrés dans la tuyère du propulseur principal, sont aussi bien connus de la personne du métier.

Chacun des deux réservoirs cryogéniques 2 et 3 est conçu pour contenir un ergol différent à l'état liquide à une très basse température. Ainsi, le premier réservoir cryogénique 2 est conçu pour contenir un premier ergol, tel que par exemple l'hydrogène liquide (LH₂), tandis que le deuxième réservoir cryogénique 3 est conçu pour contenir un deuxième ergol, tel que par exemple l'oxygène liquide (LOX). Le premier ergol et le deuxième ergol sont aptes à réagir de manière exothermique dans la chambre de combustion du propulseur principal 6.

Le premier réservoir de gaz 4 et le deuxième réservoir de gaz 5 sont aussi conçus pour contenir, respectivement, le premier ergol et le deuxième ergol, mais à l'état gazeux et à une pression intermédiaire entre la pression de chaque ergol dans son réservoir cryogénique et la pression à laquelle chaque ergol est injecté dans la chambre de combustion du propulseur principal 6.

Le premier réservoir de gaz 4 est relié au fond du premier réservoir cryogénique 2 à travers un premier et un deuxième circuit 16, 17 d'alimentation du premier réservoir de gaz 4. Le premier circuit 16 d'alimentation du premier réservoir de gaz 4 comprend une pompe 18 et un échangeur de chaleur 19 pour, respectivement, pomper le premier ergol à l'état liquide à partir du premier réservoir cryogénique 2 et le vaporiser avec une chaleur générée par le premier propulseur de tassement 7 afin de fournir au premier réservoir de gaz 4 ce premier ergol à l'état gazeux quand le premier propulseur de tassement 7 est allumé. Le deuxième circuit 17 d'alimentation du premier réservoir de gaz 4 comporte un tronçon commun avec le premier circuit 10 d'alimentation du propulseur principal 6 mais dérive de celui-ci, en aval de la turbopompe 12 et de l'échangeur de chaleur 13, à travers une vanne 27 apte à ouvrir le circuit 17 pour fournir le premier ergol à l'état gazeux au premier réservoir de gaz 4 quand le propulseur principal 6 est allumé, et à fermer ce circuit 17 quand le propulseur principal 6 est éteint. Le premier réservoir de gaz 4 est aussi relié à un distributeur 26 du premier ergol à travers un conduit 24 avec une vanne 30. Ce distributeur 26 est à son tour relié au sommet du premier réservoir cryogénique 2, à un premier circuit 14 d'alimentation des propulseurs de tassement 7, 8, et à un circuit d'alimentation 16 des propulseurs de commande d'orientation 9.

Le deuxième réservoir de gaz 5 est relié au fond du deuxième réservoir cryogénique 3 à travers un premier et un deuxième circuit 20,21 d'alimentation du deuxième réservoir de gaz 5. Le premier circuit 20 d'alimentation du deuxième réservoir de gaz 5 comprend une pompe 22 et un échangeur de chaleur 23 pour, respectivement, pomper le deuxième ergol à l'état liquide à partir du deuxième réservoir cryogénique 3 et le vaporiser avec une chaleur générée par le deuxième propulseur de tassement 8 afin de fournir au deuxième réservoir de gaz 5 ce deuxième ergol à l'état gazeux quand le deuxième propulseur de tassement 8 est allumé. Le deuxième circuit 21 d'alimentation du deuxième réservoir de gaz 5 comporte un tronçon commun avec le deuxième circuit d'alimentation 11 du propulseur principal 6 mais dérive de celui-ci, en aval de la turbopompe 12 et de l'échangeur de chaleur 13, à travers une vanne 28 apte à ouvrir le circuit 21 pour fournir le deuxième ergol à l'état gazeux au deuxième réservoir de gaz 5 quand le propulseur principal 6 est allumé, et à fermer le circuit 21 quand le propulseur principal 6 est éteint. Le deuxième réservoir de gaz 5 est aussi relié à un distributeur 29 à travers un conduit 25 avec une vanne 31. Ce distributeur 29 est à son tour relié au sommet du deuxième réservoir cryogénique 3, et à un deuxième circuit 15 d'alimentation des propulseurs de tassement 7, 8.

Le premier et le deuxième circuit 14, 15 d'alimentation des propulseurs de tassement comportent aussi des vannes 32, 33 pour piloter le passage de, respectivement, le premier et le deuxième ergol aux propulseurs de tassement 7,8. Les propulseurs de commande d'orientation comportent aussi des vannes, non-illustrées, pour distribuer le premier ergol entre les différentes tuyères. Toutes, ou une partie des vannes de l'ensemble propulsif cryogénique 1, ainsi que les pompes 18 et 22, peuvent éventuellement être connectées à une unité de commande, non illustrée, pour commander le débit de fluide dans chaque circuit.

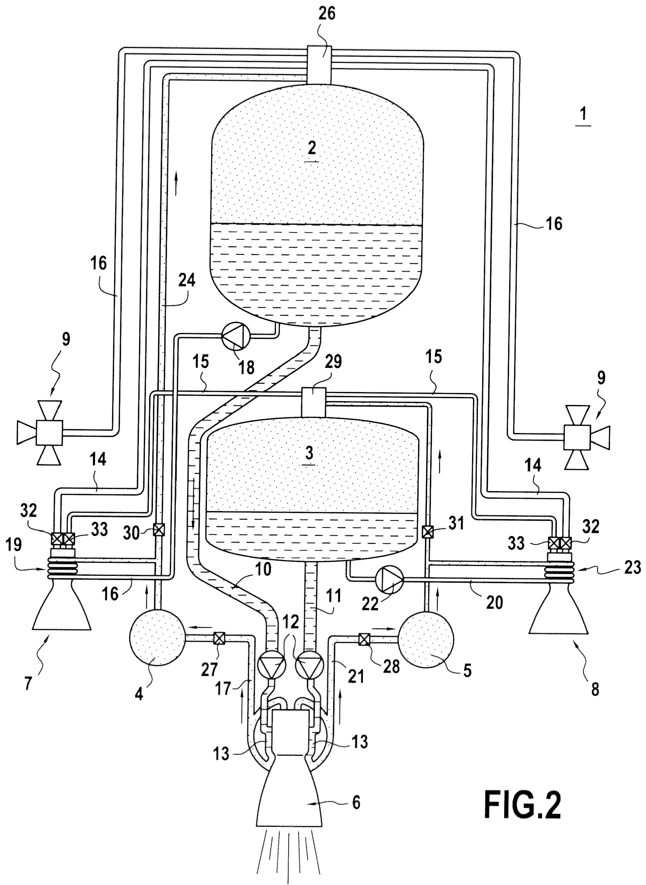

En fonctionnement, dans un lanceur équipé de l'ensemble propulsif cryogénique 1 en tant qu'étage supérieur, tant les réservoirs cryogéniques 2, 3 que les réservoirs de gaz 4, 5 seront normalement chargés en ergols avant le lancement. Ainsi, la pression des réservoirs de gaz 4, 5 peut être utilisée pour pré-pressuriser les réservoirs cryogéniques 2,3 avant la séparation de l'étage supérieur afin d'impulser la mise à froid des circuits d'alimentation 10, 11 du propulseur principal 6, et permettre un premier allumage de ce dernier. Suite à ce premier allumage, pendant une première phase de vol dans laquelle le propulseur principal 6 reste allumé, les vannes 27 et 28 restent ouvertes. Ainsi, de la manière illustrée sur la figure 2, un débit gazeux du premier ergol est dérivé à travers le deuxième circuit 17 d'alimentation du premier réservoir de gaz 4, pour recharger le premier réservoir de gaz 4, tandis qu'un débit gazeux du deuxième ergol est dérivé à travers le deuxième circuit 21 d'alimentation du deuxième réservoir de gaz 5, pour recharger aussi ce deuxième réservoir de gaz 5. Comme les deux ergols sont dérivés des circuits 10,11 d'alimentation du propulseur principal 6 en aval des turbopompes 12 et des échangeurs de chaleur 13, ils sont fournis à l'état gazeux aux réservoirs de gaz 4, 5 respectifs. Classiquement ces débits de gaz servent également au maintien en pression des réservoirs cryogéniques 2,3 pendant le fonctionnement du propulseur principal 6.

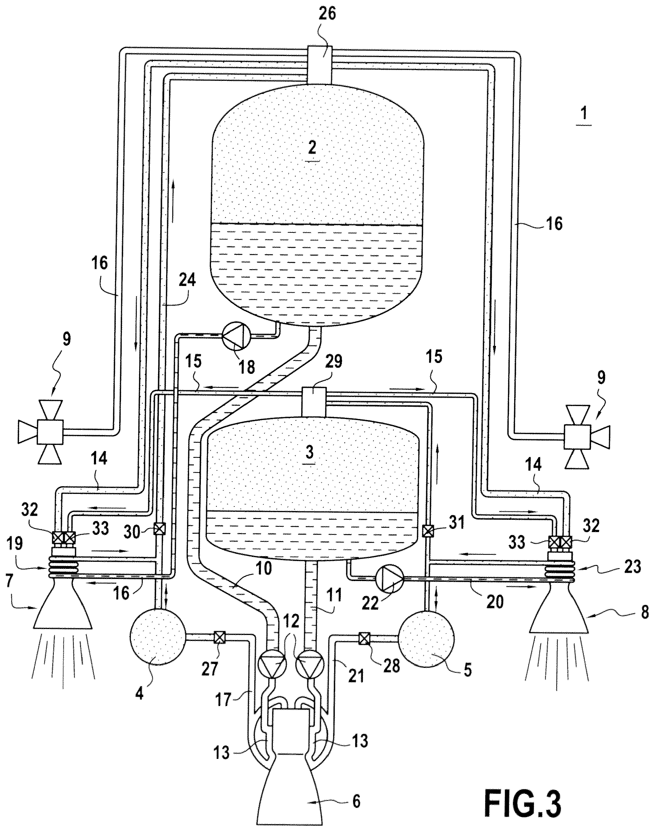

Juste avant d'éteindre le propulseur principal 6 pour entrer dans une phase de vol dite balistique, les propulseurs de tassement 7 et 8 vont être allumés. Ainsi, bien que cette phase de vol soit dite balistique, les propulseurs de tassement 7 et 8 vont maintenir une légère accélération de l'ensemble propulsif cryogénique 1 pour continuer à plaquer les ergols liquides au fond des réservoirs cryogéniques 2,3. Les propulseurs de tassement 7 et 8 sont, comme le propulseur principal 6, des propulseurs bi-ergols alimentés avec le premier et le deuxième ergol. Toutefois, comme illustré sur la figure 3, les ergols sont directement fournis à l'état gazeux aux propulseurs de tassement 7 et 8 à partir des réservoirs de gaz 4 et 5. Pour cela, les vannes 30, 31, 32 et 33 sont ouvertes, et les ergols circulent à travers les conduits 24, 25 vers les distributeurs 26, 29, et des distributeurs 26, 29, à travers les premier et deuxième circuits 14,15 d'alimentation des propulseurs de tassement 7, 8. Afin de continuer à alimenter les réservoirs de gaz 4 et 5 pendant la phase de vol balistique, les pompes 18 et 22 sont activées pour fournir les premier et deuxième ergols à partir des réservoirs cryogéniques 2, 3 et à travers, respectivement, le premier circuit d'alimentation 16 du premier réservoir de gaz 4, et le premier circuit d'alimentation 20 du deuxième réservoir de gaz 5. Les ergols circulant à travers ces circuits 16 et 20 sont vaporisés dans, respectivement, les échangeurs de chaleur 19 et 23, par une chaleur générée par les propulseurs de tassement 7 et 8. Ils sont ainsi fournis à l'état gazeux aux réservoirs de gaz 4 et 5. Bien que dans le mode de réalisation illustré chacun des échangeurs de chaleur 19 et 23 est associé à un propulseur de tassement différent, il serait bien sûr évident pour la personne du métier d'adopter d'autres arrangements largement équivalents. Par exemple, au moins un des propulseurs de tassement pourrait être associé à au moins un échangeur de chaleur pour chacun des deux ergols.

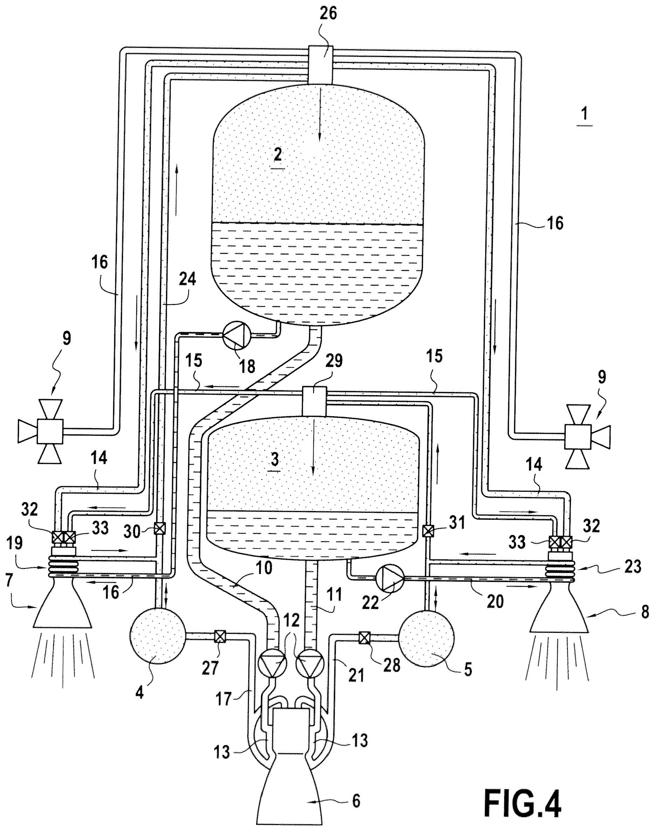

Pendant la phase de vol balistique, les réservoirs cryogéniques 2,3 sont dépressurisés jusqu'aux pressions de saturation des ergols afin de pouvoir maintenir un contrôle de la température des ergols liquides. Avant un rallumage du propulseur principal 6, il convient donc de re-pressuriser les réservoirs cryogéniques 2,3. Pour cela, les distributeurs 26 et 29 mettent en communication les conduits 24 avec les sommets des réservoirs cryogéniques 2, 3 respectifs, formant ainsi deux circuits de re-pressurisation des réservoirs cryogéniques 2, 3 en communication avec les réservoirs de gaz 2, 3, comme illustré sur la figure 4. Quand un seuil de pression prédéterminé est atteint dans chacun des réservoirs cryogéniques 2 et 3, les circuits 10, 11 d'alimentation du propulseur principal 6 peuvent être réactivés pour alimenter le propulseur principal 6 en ergols, et le propulseur principal 6 peut être rallumé.

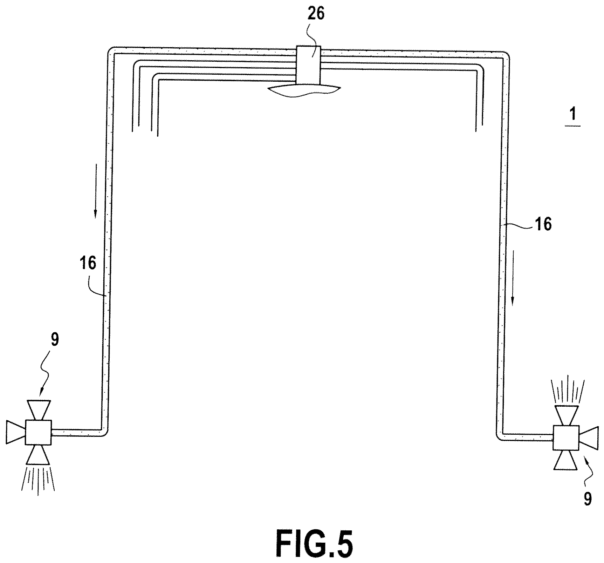

En outre, pendant chacune de ces différentes étapes, le premier réservoir de gaz 4 peut aussi fournir le premier ergol à l'état gazeux aux propulseurs de commande d'orientation 9 à travers le conduit 24, le distributeur 26, et le circuit d'alimentation 16 des propulseurs de commande d'orientation 9, comme illustré sur la figure 5. L'expulsion contrôlée de ce gaz froid ou tiède par les propulseurs de commande d'orientation 9 permet ainsi de donner des légères impulsions latérales à l'étage supérieur pour commander son orientation et éventuellement sa trajectoire.

Ainsi, pendant ces différentes étapes de vol, les réservoirs de gaz 4, 5 offrent des capacités tampon, servant à atteindre les débits d'ergols gazeux requis pour l'alimentation des propulseurs de tassement 7,8 et/ou de commande d'orientation 9, et/ou pour la pressurisation, maintien de pression et/ou ré-pressurisation des réservoirs cryogéniques 2,3 quand ces débits combinés excèdent ce qui peut être fourni par les différents échangeurs de chaleur 13,19 et/ou 23. Les réservoirs de gaz 4, 5 peuvent ensuite être rechargés quand les demandes en gaz diminuent.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, des caractéristiques individuelles de différents modes de réalisation peuvent être combinées dans des modes de réalisation additionnels. Par conséquent, la description et les dessins doivent être considérés dans un sens illustratif plutôt que restrictif.

## Revendications

1. Ensemble propulsif cryogénique (1), comprenant au moins :
un propulseur principal (6) rallumable,
un premier réservoir cryogénique (2), relié au propulseur principal (6) pour l'alimenter avec un premier ergol,
un premier réservoir de gaz (4), et
au moins un propulseur de tassement (7,8),
l'ensemble étant **caractérisé en ce qu'**il comporte aussi :
un premier circuit (16) d'alimentation du premier réservoir de gaz (4), relié au premier réservoir cryogénique (2) et comprenant un échangeur de chaleur (19) pour vaporiser, avec une chaleur dégagée par l'au moins un propulseur de tassement (7,8), un débit liquide du premier ergol, extrait du premier réservoir cryogénique (2), afin d'alimenter le premier réservoir de gaz (4) avec le premier ergol à l'état gazeux.

2. Ensemble propulsif cryogénique (1) suivant la revendication 1, dans lequel le premier réservoir de gaz (4) est relié au propulseur de tassement (7) pour alimenter ledit propulseur de tassement (7).

3. Ensemble propulsif cryogénique (1) suivant l'une quelconque des revendications 1 ou 2, dans lequel le premier réservoir de gaz (4) est relié au premier réservoir cryogénique (2) pour pressuriser ledit premier réservoir cryogénique (2).

4. Ensemble propulsif cryogénique (1) suivant l'une quelconque des revendications 1 à 3, comprenant en outre au moins un propulseur (9) de commande d'orientation, relié au premier réservoir de gaz (4).

5. Ensemble propulsif cryogénique (1) suivant l'une quelconque des revendications 1 à 4, comprenant en outre un deuxième circuit (17) d'alimentation du premier réservoir de gaz (4), relié au premier réservoir cryogénique (2) et comprenant un échangeur de chaleur (13) pour vaporiser, avec une chaleur dégagée par le propulseur principal (6), un débit liquide du premier ergol extrait du premier réservoir cryogénique (2) afin d'alimenter le premier réservoir de gaz (4) avec le premier ergol à l'état gazeux.

6. Ensemble propulsif cryogénique (1) suivant l'une quelconque des revendications 1 à 5, dans lequel le premier circuit (16) d'alimentation du premier réservoir de gaz (4) comprend en outre au moins une pompe d'alimentation (18).

7. Ensemble propulsif cryogénique (1) suivant l'une quelconque des revendications 1 à 6, comprenant en outre :
un deuxième réservoir cryogénique (3) relié au propulseur principal (6) pour l'alimenter avec un deuxième ergol ;
un deuxième réservoir de gaz (5) ; et
un premier circuit (20) d'alimentation du deuxième réservoir de gaz (5), relié au deuxième réservoir cryogénique (3) et comprenant un échangeur de chaleur (23) pour vaporiser, avec une chaleur générée par l'au moins un propulseur de tassement (7,8), un débit liquide du deuxième ergol, extrait du deuxième réservoir cryogénique (3), afin d'alimenter le deuxième réservoir de gaz (5) avec le deuxième ergol à l'état gazeux.

8. Etage supérieur d'un lanceur d'engins spatiaux, comportant un ensemble propulsif cryogénique (1) suivant l'une quelconque des revendications 1 à 7.

9. Procédé d'alimentation d'un premier réservoir de gaz (4) d'un ensemble propulsif cryogénique (1) avec un premier ergol à l'état gazeux dans lequel, quand un propulseur principal (6) rallumable est éteint et au moins un propulseur de tassement (7,8) est allumé :
un débit liquide du premier ergol est extrait d'un premier réservoir cryogénique (2) à travers un premier circuit (16) d'alimentation du premier réservoir de gaz (4) ; le procédé étant **caractérisé en ce que** ledit débit liquide du premier ergol est vaporisé, dans un échangeur de chaleur (19) dudit premier circuit (16) d'alimentation du premier réservoir de gaz (4), par une chaleur dégagée par l'au moins un propulseur de tassement (7,8), avant d'être fourni au premier réservoir de gaz (4).

10. Procédé d'alimentation suivant la revendication 9, dans lequel, quand le propulseur principal (6) est allumé :
un débit liquide du premier ergol est extrait du premier réservoir cryogénique (2) à travers un deuxième circuit (17) d'alimentation du premier réservoir de gaz (4) ;
le débit liquide du premier ergol extrait à travers le deuxième circuit (17) d'alimentation du premier réservoir de gaz (4) est vaporisé, dans un échangeur de chaleur (13) du deuxième circuit (17) d'alimentation du premier réservoir de gaz (4), par une chaleur dégagée par le propulseur principal (6), avant d'être fourni au premier réservoir de gaz (4).

## Patentansprüche

1. Kryogene Antriebseinheit (1), umfassend mindestens:
ein wiederzündbares Haupttriebwerk (6),
einen ersten Kryotank (2), der mit dem Haupttriebwerk (6) verbunden ist, um es mit einem ersten Treibstoff zu versorgen,
einen ersten Gastank (4) und
mindestens ein Treibstoff-Förderhilfstriebwerk (7, 8),
wobei die Einheit **dadurch gekennzeichnet ist, dass** sie ferner umfasst:
einen ersten Versorgungskreislauf (16) des ersten Gastanks (4), der mit dem ersten Kryotank (2) verbunden ist und einen Wärmetauscher (19) umfasst, um mit einer von dem mindestens einen Verdichtungstriebwerk (7, 8) freigesetzten Wärme einen Flüssigkeitsstrom des ersten Treibstoffs, der aus dem ersten Kryotank (2) extrahiert wird, zu verdampfen, um den ersten Gastank (4) mit dem ersten Treibstoff im gasförmigen Zustand zu versorgen.

2. Kryogene Antriebseinheit (1) gemäß Anspruch 1, wobei der erste Gastank (4) mit dem Verdichtungstriebwerk (7) verbunden ist, um das Treibstoff-Förderhilfstriebwerk (7) zu versorgen.

3. Kryogene Antriebseinheit (1) gemäß einem der Ansprüche 1 oder 2, wobei der erste Gastank (4) mit dem ersten Kryotank (2) verbunden ist, um den ersten Kryotank (2) unter Druck zu setzen.

4. Kryogene Antriebseinheit (1) gemäß einem der Ansprüche 1 bis 3, ferner umfassend mindestens ein mit dem ersten Gastank (4) verbundenes Orientierungssteuerungstriebwerk (9).

5. Kryogene Antriebseinheit (1) gemäß einem der Ansprüche 1 bis 4, ferner umfassend einen zweiten Versorgungskreislauf (17) des ersten Gastanks (4), der mit dem ersten Kryotank (2) verbunden ist und einen Wärmetauscher (13) umfasst, um mit einer von dem Haupttriebwerk (6) freigesetzten Wärme einen Flüssigkeitsstrom des ersten Treibstoffs, der aus dem ersten Kryotank (2) extrahiert wird, zu verdampfen, um den ersten Gastank (4) mit dem ersten Treibstoff im gasförmigen Zustand zu versorgen.

6. Kryogene Antriebseinheit (1) gemäß einem der Ansprüche 1 bis 5, wobei der erste Versorgungskreislauf (16) des ersten Gastanks (4) ferner mindestens eine Versorgungspumpe (18) aufweist.

7. Kryogene Antriebseinheit (1) gemäß einem der Ansprüche 1 bis 6, ferner umfassend:
einen zweiten Kryotank (3) der mit dem Haupttriebwerk (6) verbunden ist, um es mit einem zweiten Treibstoff zu versorgen,
einen zweiten Gastank (5), und
einen ersten Versorgungskreislauf (20) des zweiten Gastanks (5), der mit dem zweiten Kryotank (3) verbunden ist und einen Wärmetauscher (23) umfasst, um mit einer von dem mindestens einen Treibstoff-Förderhilfstriebwerk (7, 8) erzeugten Wärme einen Flüssigkeitsstrom des zweiten Treibstoffs, der aus dem zweiten Kryotank (3) extrahiert wird, zu verdampfen, um den zweiten Gastank (5) mit dem zweiten Treibstoff im gasförmigen Zustand zu versorgen.

8. Oberstufe einer Trägerrakete für Raumfahrzeuge, umfassend eine kryogene Antriebseinheit (1) gemäß einem der Ansprüche 1 bis 7.

9. Verfahren zum Versorgen eines ersten Gastanks (4) einer kryogenen Antriebseinheit (1) mit einem ersten Treibstoff im gasförmigen Zustand, wobei, wenn ein wiederzündbares Haupttriebwerk (6) ausgeschaltet und mindestens ein Treibstoff-Förderhilfstriebwerk (7, 8) eingeschaltet wird:
ein Flüssigkeitsstrom des ersten Treibstoffs aus einem ersten Kryotank (2) durch einen ersten Versorgungskreislauf (16) des ersten Gastanks (4) extrahiert wird, wobei das Verfahren **dadurch gekennzeichnet ist, dass**
der Flüssigkeitsstrom des ersten Treibstoffs in einem Wärmetauscher (19) des ersten Versorgungskreislaufs (16) des ersten Gastanks (4) durch eine von dem mindestens einen Treibstoff-Förderhilfstriebwerk (7, 8) freigesetzte Wärme verdampft wird, bevor er dem ersten Gastank (4) zugeführt wird.

10. Verfahren zum Versorgen gemäß Anspruch 9, wobei, wenn das Haupttriebwerk (6) eingeschaltet ist:
ein Flüssigkeitsstrom des ersten Treibstoffs aus dem ersten Kryotank (2) durch einen zweiten Versorgungskreislauf (17) des ersten Gastanks (4) extrahiert wird,
wobei der Flüssigkeitsstrom des ersten Treibstoffs, der durch den zweiten Versorgungskreislauf (17) des ersten Gastanks (4) extrahiert wird, in einem Wärmetauscher (13) des zweiten Versorgungskreislaufs (17) des ersten Gastanks (4) durch eine vom Haupttriebwerk (6) freigesetzte Wärme verdampft wird, bevor er dem ersten Gastank (4) zugeführt wird.

## Claims

1. A cryogenic thruster assembly (1) comprising at least:
a reignitable main thruster (6);
a first cryogenic tank (2) connected to the main thruster (6) to feed it with a first propellant;
a first gas tank (4); and
at least one settling thruster (7, 8),
the assembly being **characterized in that** it also comprises:
a first feed circuit (16) for feeding the first gas tank (4), the first feed circuit being connected to the first cryogenic tank (2) and having a heat exchanger (19) for using heat given off by the at least one settling thruster (7, 8) to vaporize a liquid flow of the first propellant as extracted from the first cryogenic tank (2) in order to feed the first gas tank (4) with the first propellant in the gaseous state.

2. A cryogenic thruster assembly (1) according to claim 1, wherein the first gas tank (4) is connected to the settling thruster (7) in order to feed said settling thruster (7).

3. A cryogenic thruster assembly (1) according to claim 1 or claim 2, wherein the first gas tank (4) is connected to the first cryogenic tank (2) in order to pressurize said first cryogenic tank (2).

4. A cryogenic thruster assembly (1) according to any one of claims 1 to 3, further comprising at least one steering control thruster (9) connected to the first gas tank (4).

5. A cryogenic thruster assembly (1) according to any one of claims 1 to 4, further comprising a second feed circuit (17) for feeding the first gas tank (4), the second feed circuit being connected to the first cryogenic tank (2) and including a heat exchanger (13) for using heat given off by the main thruster (6) to vaporize a liquid flow of the first propellant extracted from the first cryogenic tank (2) in order to feed the first gas tank (4) with the first propellant in the gaseous state.

6. A cryogenic thruster assembly (1) according to any one of claims 1 to 5, wherein the first feed circuit (16) of the first gas tank (4) further comprises at least one feed pump (18).

7. A cryogenic thruster assembly (1) according to any one of claims 1 to 6, further comprising:
a second cryogenic tank (3) connected to the main thruster (6) to feed it with a second propellant;
a second gas tank (5); and
a first feed circuit (20) for feeding the second gas tank (5), the first feed circuit being connected to the second cryogenic tank (3) and including a heat exchanger (23) for using heat generated by the at least one settling thruster (7, 8) to vaporize a liquid flow of the second propellant extracted from the second cryogenic tank (3) in order to feed the second gas tank (5) with the second propellant in the gaseous state.

8. A top stage of a space vehicle launcher, the top stage including a cryogenic thruster assembly (1) according to any one of claims 1 to 7.

9. A method of feeding a first gas tank (4) of a cryogenic thruster assembly (1) with a first propellant in the gaseous state, wherein a reignitable first thruster (6) is extinguished and at least one settling thruster (7, 8) is ignited, the following steps are performed:
extracting a liquid flow of the first propellant from a first cryogenic tank (2) via a first feed circuit (16) for feeding the first gas tank (4); and
vaporizing said liquid flow of the first propellant in a heat exchanger (19) of said first feed circuit (16) of the first gas tank (4) by means of heat given off by the at least one settling thruster (7, 8), prior to delivering it to the first gas tank (4).

10. A method of feeding according to claim 9, wherein, when the main thruster (6) is ignited, the following steps are performed:
extracting a first liquid flow of the first propellant from the first cryogenic tank (2) via a second feed circuit (17) for feeding the first gas tank (4); and
vaporizing the liquid flow of the first propellant extracted via the second feed circuit (17) of the first gas tank (4) in a heat exchanger (13) of the second feed circuit (17) of the first gas tank (4) by means of heat given off by the main thruster (6) prior to delivering it to the first gas tank (4).
